# NEW EUROPEAN PATENT SPECIFICATION

(11) **EP 3 303 967 B2**
(45) Date of publication and mention of the opposition decision: **19.10.2022**
(45) Mention of the grant of the patent: 19.06.2019
(21) Application number: 16775687.3
(22) Date of filing: 30.09.2016
(51) Int. Cl.: F28D 20/00

(54) **HEAT EXCHANGE SYSTEM WITH AT LEAST TWO HEAT EXCHANGE CHAMBERS AND METHOD FOR EXCHANGING HEAT BY USING THE HEAT EXCHANGE SYSTEM**
WÄRMEAUSTAUSCHSYSTEM MIT ZUMINDEST ZWEI WÄRMEAUSTAUSCHKAMMERN UND VERFAHREN ZUM WÄRMEAUSTAUSCH ANHAND DES WÄRMEAUSTAUSCHSYSTEMS
SYSTÈME D'ÉCHANGE DE CHALEUR AVEC AU MOINS DEUX CHAMBRES D'ÉCHANGE DE CHALEUR, ET PROCÉDÉ D'ÉCHANGE DE CHALEUR UTILISANT LE SYSTÈME D'ÉCHANGE DE CHALEUR

(30) Priority: 30.09.2015 EP 15187743
(43) Date of publication of application: 11.04.2018
(73) Proprietor: Siemens Gamesa Renewable Energy A/S, 7330 Brande (DK)
(72) Inventor: BARMEIER, Till Andreas, 20259 Hamburg (DE)
(74) Representative: SGRE-Association
(86) International application number: PCT/EP2016/073388
(87) International publication number: WO 2017/055525

(56) References cited:
- EP-A2- 2 703 764
- WO-A2-2011/104556
- GB-A- 2 516 453
- US-A1- 2008 066 736
- US-A1- 2010 287 933

## Description

### BACKGROUND OF THE INVENTION

### 1. FIELD OF THE INVENTION

The present invention refers to a heat exchange system with at least two heat exchange chambers and a method for exchanging heat by using the heat exchange system. Such a system and method is known from EP-A-2703764 disclosing the features according to the preamble of claim 1.

### 2. DESCRIPTION OF THE RELATED ART

Despite the integration of renewable energy into the public electric energy system (power grid) a large share of electricity is nowadays still generated by fossil energy sources. But the global climate change requires the further development of renewable energies.

The energy output of renewable energy sources like wind and solar is not constant throughout a day or throughout a year. Consequently, electricity which is generated by utilizing energy from renewable energy sources fluctuates.

In order to manage this fluctuating electricity, heat (thermal energy) storage systems are developed for storing and releasing thermal energy (heat exchange system). Such a heat exchange system comprises a heat exchange chamber with heat exchange chamber boundaries which surround a heat exchange chamber interior. The heat exchange chamber interior is filled with heat storage material like stones. The heat exchange chamber boundaries comprise a first opening for guiding an inflow of a heat transfer fluid, e.g. air, into the heat exchange chamber interior and a second opening for guiding out an outflow of the heat transfer fluid out of the heat exchange chamber interior.

For a charging mode, the heat exchange system additionally comprises a charging unit for heating the heat transfer fluid with the aid of excess electricity. The resulting hot heat transfer fluid is infused into the heat exchange chamber interior via one of the openings (e.g. first opening) of the heat exchange chamber boundaries. This opening defines a "hot" terminal of the heat exchange chamber. The hot heat transfer fluid is guided through the heat exchange chamber interior. By the guiding of the hot heat transfer fluid through the heat exchange chamber interior a heat transfer from the heat transfer fluid to the heat storage material is caused. Heat is stored by the heat storage material.

Via the other opening (second opening) of the heat exchange chamber the resulting "cold" heat transfer fluid is guided out of the heat exchange chamber interior. Thereby, this opening of the heat exchange chamber boundaries defines a "cold" terminal (end) of the heat exchange chamber. The charging mode is stopped when the temperature at the cold terminal of the heat exchange chamber begins to rise above a predetermined temperature.

In a discharging mode of the heat exchange chamber this stored heat can be recovered: "cold" heat transfer fluid is infused into the heat exchange chamber interior via one of the openings of the heat exchange chamber boundaries. In this case, the first opening defines a "cold" terminal. The cold heat transfer fluid is guided through the hot heat exchange chamber interior. By the guiding of the cold heat transfer fluid through the heat exchange chamber interior a heat transfer from the heat storage material to the heat transfer fluid is caused. Heat is released from the heat storage material.

Via the second opening of the heat exchange chamber boundaries the resulting "hot" heat transfer fluid is guided out of the heat exchange chamber interior. Thereby, the second opening of the heat exchange chamber defines a "hot" terminal of the heat exchange chamber.

The resulting hot heat transfer fluid can be used for generating steam with which a steam turbine is driven. Result of the described discharging mode: Heat is transformed back to electricity.

The discharging mode is stopped when the temperature at the cold terminal of the heat exchange storage begins to drop below a certain temperature.

A forecast of the amount of the energy output of renewable energy sources is pretty difficult. Hence, the providing of suitable heat exchange system is difficult, too.

### SUMMARY OF THE INVENTION

It is an objective of the invention to provide a heat exchange system for flexibly storing (absorbing) energy and for flexibly releasing the stored (absorbed) energy.

This objective is achieved by the invention specified in the claims.

A heat exchange system with at least two horizontal heat exchange chambers is provided, wherein each of the heat exchange chambers comprises heat exchange chamber boundaries which surround at least one heat exchange chamber interior of the heat exchange chamber. The heat exchange chamber boundaries comprise at least one first opening for guiding in of an inflow of at least one heat transfer fluid into the heat exchange chamber interior and at least one second opening for guiding out of an outflow of the heat transfer fluid out of the heat exchange chamber interior. At least one heat storage material is arranged in the heat exchange chamber interior such that a heat exchange flow of the heat transfer fluid through the heat exchange chamber interior causes a heat exchange between the heat storage material and the heat transfer fluid. The heat exchange flow through the heat exchange chamber interior of each of the heat exchange chambers can be adjusted individually with the aid of at least one flow adjusting element.

In addition to the heat exchange system, a method for exchanging heat by using the heat exchange system is provided, wherein the heat exchange flow through the heat exchange chamber interior of each of the heat exchange chambers is individually adjusted with the aid of the flow adjusting element.

Each of the heat exchange flows can be separately adjusted. This means that the heat exchange chamber can be individually activated or deactivated. So, their availability for the heat exchange chambers for the heat exchange can be controlled.

Thereby, just one joint flow adjusting element can be used. But, a number of flow adjusting elements can be used, too. For instance, the heat exchange flows through the heat exchange chamber interiors of each of the heat exchange chambers can be adjusted by separate flow adjusting elements.

A heat exchange chamber is a space, cavity or a housing in which the heat storage material is located. Inside of the heat exchange chamber the heat exchange takes place. In order to provide an efficient heat exchange, the heat exchange chamber is preferably thermally insulated against the surroundings. The loss of heat is reduced by the thermal insulation.

The heat transfer fluid is guided (led) into the heat exchange chamber interior via the first opening and is guided out of the heat exchange chamber interior via the second opening. The first opening of the heat exchange chamber boundaries is an inlet opening. The second opening of the heat exchange chamber boundaries is an outlet opening. Thus, there are different areas of the heat exchange chamber boundaries, namely an inlet area of the heat exchange chamber boundaries with the first opening and an outlet area of the heat exchange chamber boundaries with the second opening.

The operating mode of the heat exchange system is selected from the group consisting of charging mode with a heat transfer from the heat transfer fluid to the heat storage material and discharging mode with a heat transfer from the heat storage material to the heat transfer fluid.

Preferably, during the charging mode of the heat exchange system the heat exchange flow is directed in a charging mode direction through the heat exchange chamber interior of at least one of the heat exchange chambers; during a discharging mode the heat exchange flow is directed in a discharging mode direction through the heat exchange chamber interior of at least one of the heat exchange chambers; and the charging mode direction and the discharging mode direction are opposed to each other.

Depending on the operating mode, a specific opening can have the function of an inlet opening or the function of an outlet opening. The flow direction of the heat exchange flow depends on the operating mode. Preferably, during the charging mode the heat exchange flow is directed in a charging mode direction, during the discharging mode the heat exchange flow is directed in a discharging mode direction and the charging mode direction and the discharging mode direction are opposed to each other (countercurrent operation). But, a change of the directions of the heat exchange flow is not necessary. Charging mode direction and discharging mode direction comprise the same direction (co-current operation).

In countercurrent operation, switching from the charging mode to the discharging mode the direction of the heat exchange flow through the heat exchange chamber interior is reversed and consequently, the function of the openings (inlet opening, outlet opening) reversed, too. With such a solution it is especially advantageous to use the same heat transfer fluid for the charging mode and for the discharging mode. But of course, different heat transfer fluids for the charging mode and the discharging mode can be used, too.

For the charging mode, the heat exchange system is equipped with at least one charging unit for heating the heat transfer fluid. In the charging mode with activated charging unit, the charging unit can be located upstream of the heat exchange chamber.
Preferably, the charging unit comprises at least one electrical heating device which is selected from the group consisting of resistance heater, inductive heater, emitter of electromagnetic radiation and heat pump. The electromagnetic radiation is preferably infrared radiation. A combination of different electrical heating devices is possible. With the aid of the electrical heating devices electricity is transformed into heat. This heat is absorbed by the heat transfer fluid and transported to the heat storage material in the heat exchange chamber interior.

For instance, the electrical heating device comprises a resistance heater. This heater is located in the heat exchange inflow upstream of the heat exchange chamber. The heat transfer fluid is heated up before its entering of the heat exchange chamber interior. The resistance heater comprises a large heat exchange area for an efficient heat exchange from the resistance heater to the heat transfer fluid. For instance, the large heat exchange area is formed by a grid of the resistance heater. A meander shaped resistance heater is possible, too. With such a measure, the heat transfer to the heat transfer fluid is enhanced. In addition, the possibility of the (not desired) occurrence of hot spots within the resistance heater is reduced.

The heat exchange system is preferably equipped with at least one discharging unit for discharging the heat transfer fluid of the outflow from heat for production of electricity. Heat is removed from the heat transfer fluid. The removed heat is transformed into electricity. In a preferred embodiment, the transformation of heat into electricity is carried by a water/steam cycle for driving a turbine of a steam power plant.

The discharging mode can be realized when electricity prices and demand are high or when the production of renewable energies is low. For that and in order to limit the costs which are connected to the invention, it is advantageous to use existing power plants. So, the heat exchange system is a kind of retrofit system. For instance, well suited are CCPP (combined cycle power plant) since their heat recovery steam generator (HRSG) is similar to the application proposed here. Nevertheless, hard coal, oil, gas, waste incineration, wood or lignite fired power plants can be used since the charging unit can be designed for high temperatures to match the temperatures used in the steam generator. In a hybrid mode the fuel can be used to increase the temperature from the temperature level of the heat exchange system to the operating temperature of the original furnace or boiler design.

As described above, the heat exchange chamber can be individually adjusted. Thereby, a direct adjustment of the heat exchange flow of the heat transfer fluid trough the heat exchange chamber interior of the heat exchange chambers is possible as well as an indirect adjustment of the heat exchange flow of the heat transfer fluid trough the heat exchange chamber. For instance, an indirect adjustment of the heat transfer fluid trough the heat exchange chamber is possible with the aid of the adjusting of the inflow of the heat transfer fluid and/or the outflow of the heat transfer fluid. Therefore, in a preferred embodiment, the flow adjusting element is designed for adjusting the inflow of the heat transfer fluid into the heat exchange chamber interior of at least one of the heat exchange chambers and/or for adjusting the outflow of the heat transfer fluid out of the heat exchange chamber interior of at least one of the heat exchange chambers.

In a preferred embodiment, the flow adjusting element comprises at least one flow suppressing element. With the aid of the flow suppressing element it is possible to decouple a specific heat exchange chamber from the heat exchanging process. This heat exchange chamber is deactivated.

In a preferred embodiment, the flow adjusting element and/or the flow suppressing element comprise at least one passive fluid control device which is selected from the group consisting of activatable bypass pipe, nozzle, damper, flap and valve. The advantage of passive fluid control devices is that they are cheap. Moreover, passive fluid control devices are very reliable.

According to the invention, the flow adjusting element comprises at least one active fluid motion device which is selected from the group consisting of blower, fan and pump and/or the flow adjusting element comprises at least one passive fluid control device which is selected from the group consisting of activatable bypass pipe, nozzle, flap, damper and valve. A multitude of these devices are possible as well as a combination of these devices. Preferably, driving units of the active fluid motion devices like electrical motors and electrical equipment are located outside of the heat exchange flow with the (possibly very hot) heat transfer fluid.

Just to be noted: There are different locations for the flow adjusting element possible. The flow adjusting element can be directly arranged in the heat exchange chamber interior, downstream of the heat exchange chamber interior and/or upstream of the heat exchange chamber interior. The location depends - inter alia - on the kind of flow adjusting element (active fluid motion device or passive fluid control device).

In a preferred embodiment, the heat exchange chamber interiors of the heat exchange chambers are conjunct together with the aid of at least one conjunction element for guiding of the heat transfer fluid. The conjunction element comprises two functions: It connects the heat exchange chamber interiors as well as it guides the heat transfer fluid trough its interior.

One important aspect of the invention is the individual activation and/or deactivation of the heat exchange chambers. For that purpose, it is advantageous that the heat exchange system comprises at least one ducting element and/or at least one switching element. Preferably, the switching element and/or the ducting element comprise the flow adjusting element. Preferably, this flow adjusting element is a passive flow control element.

In a preferred embodiment of the method, the heat exchange flow through the heat exchange chamber interior of at least one of the heat exchange chambers is interrupted during an idle mode of the heat exchange system. For this interruption, a passive flow control element can be used. The heat exchange chamber is deactivated.

In accordance with the invention the heat exchange chamber interiors of the heat exchange chambers are serially connected together such that the inflow of the heat transfer fluid (into the heat exchange chamber interior of one of the heat exchange chambers comprises the outflow of the heat transfer fluid out of the heat exchange chamber interior of the other heat exchange chamber. The heat transfer fluid moves successively through the heat chamber interiors of the heat exchange chambers.

The heat storage material can be liquid and/or solid. For instance, a core of the heat storage material is solid and a coating of this solid core is liquid. Such a liquid coating can comprise ionic liquid.

The solid material comprises preferably bulk material. Mixtures of different liquid materials and different solid materials are possible as well as mixtures of liquid and solid materials.

It is possible that the heat storage material is a thermo-chemical energy storage material: Thermal energy can be stored via an endothermic reaction whereas thermal energy can be released via an exothermic reaction. Such a thermo chemical storage material is for instance the calcium oxide/calcium hydroxide system.

The heat storage materials can be arranged in one or more specific containers made of non-reactive container material. Non-reactive means that no chemical reaction between the heat storage material and the container material takes place during the heat exchange process.

In a preferred embodiment, the heat storage material comprises at least one chemically and/or physically stable material. In the range of the operational temperature of the heat exchange system the heat storage material does not change its physical and/or chemical properties. A physically stable material does not change its physical properties during the heat exchange. For instance, the heat storage material remains in a solid state in the operating temperature range. A chemically stable material does not change its chemical composition during the heat exchange. For instance, such a chemically stable material is a phase change material (PCM).

Moreover, a complex heat exchange system with different heat exchange chambers with different heat storage materials and/or different heat transfer fluids is possible, too. For Instance, a heat exchange chamber with stones as heat storage material and a heat exchange chamber with a phase change material as a heat storage material are combined together (in parallel or in series).

In a preferred embodiment, the heat storage material comprises sand and/or stones. The stones can be natural stones or artificial stones. Mixtures thereof are possible, too. Artificial stones can consist of containers which are filled with heat storage material. This heat storage material is for instance a phase change material or a thermo-chemical storage material (see above).

Preferably, the stones comprise gravel (pebbles), rubbles and/or grit (splits). The artificial material comprises preferably clinkers or ceramics. Again, mixtures of the mentioned materials are possible, too.

In order to provide a cheap energy storage material it is advantageous to use waste material. Therefore, in a preferred embodiment, the artificial material comprises at least one by-product of an industrial process. For instance, the by-product is iron silicate. Iron silicate origins from a slag of copper production.

In a preferred embodiment, heat exchange channels are embedded in the heat storage material for guiding of the heat exchange flow through the heat exchange chamber interior. The heat storage material forms a heat exchange bed. The heat exchange bed comprises the heat exchange channels. The heat exchange channels are embedded into the heat storage bed such that the heat exchange flow of the heat transfer fluid through the heat exchange channels causes the heat exchange between the heat storage material and the heat transfer fluid. The heat exchange channels can be formed by interspaces (gaps) of the heat storage material. For instance, the heat storage material comprises stones. The stones form the heat exchange bed with the heat exchange channels. In addition or alternatively, the heat storage material is porous. Open pores of the heat storage material form the heat exchange channels.

The heat transfer fluid is selected from the group consisting of a liquid and a gas. The gas is selected from the group consisting of inorganic gas and/or organic gas. The inorganic gas is preferably air. Mixtures of different liquids are possible as well as mixtures of different gases.

Preferably, the heat transfer fluid comprises a gas at ambient gas pressure. Preferably, the gas at the ambient pressure is air. The ambient pressure (900 hPa to 1.100 hPa) varies such that the heat exchange flow through the heat exchange chamber interior is caused.

For the guiding of the heat transfer fluid into the heat exchange chamber interior and for the guiding of the heat transfer fluid out of the heat exchange chamber interior a pipe system (or channel system, ducting system) is used. This pipe system can be closed (with a closed loop) or can be open (with an open loop). For instance the heat transfer fluid is ambient air of the environment. The loop is an open loop. Air from the environment is introduced into the heat exchange system and air of the heat exchange system is released to the surroundings. There is an air exchange during the operation of the heat exchange system.

In contrast to that, there is no air exchange or a selectively adjustable air exchange during the operation in a closed loop. Air of the environment is not added or just added on a small scale to the air which is used as heat transfer fluid. This has following specific advantage: In a situation with almost completely charged heat storage material, heat transfer fluid with remaining heat would be released to the environment in an open loop. The remaining heat is lost. In contrast to that, in a closed loop this heat transfer fluid with remaining heat stays in heat exchange system. The remaining heat is not lost. Therefore, in a preferred embodiment, a closed loop is implemented and wherein the inflow comprises the outflow. The outflow is guided back into the heat exchange chamber interior.

According to the invention the heat exchange chambers are horizontal heat exchange chambers.

The term "horizontal heat exchange chamber" implies a horizontal main (average) flow of the heat transfer fluid through the heat exchange chamber interior. The flow direction of the horizontal main flow is essentially parallel to the average surface of the earth. The horizontal direction is essentially a perpendicular direction to the direction of the gravity force which affects the heat transfer fluid. Perpendicular means in this context that deviations from the perpendicularity of up to 20° and preferably deviations of up to 10° are possible.

A horizontally oriented direction of the heat exchange flow can be achieved by lateral first openings and/or lateral second openings. The horizontal heat exchange chamber comprises these openings in its side heat exchange chamber boundaries. In addition, with the aid of an active fluid motion device like a blower or a pump the heat exchange flow in the heat exchange chamber interior is caused. The heat transfer fluid is blown or pumped into the heat exchange chamber interior or is pumped or sucked out of the heat exchange chamber interior.

In contrast to the term "horizontal heat exchange chamber", the term "vertical heat exchange chamber" implies a vertical main flow of the heat transfer fluid through the heat exchange chamber interior. For instance, the operating mode is the charging mode. In a vertical heat exchange chamber the heat exchange flow is preferably directed downwards (top down) during the charging mode. The vertical main flow (essentially parallel but in the opposite direction to the direction of gravity force) can be caused by an active fluid motion device (blower or pump). The first opening is located at a top of the heat exchange chamber and the second opening is located at a bottom of the heat exchange chamber.

Based on natural convection, in a vertical heat exchange chamber the temperature of the heat storage material along a cross section perpendicular to the flow direction of the heat transfer fluid is approximately the same (horizontal isothermal lines).

In contrast to that, in a horizontal heat exchange chamber due to natural convection the temperature of the heat storage material along the cross section perpendicular to the flow direction of the heat transfer fluid (see below) can differ (inclined isothermal lines).

It has to be noted that the terms "horizontal" and "vertical" are independent from the dimensions of the heat exchange chamber and its orientation. Decisive is the direction of the flow of the heat transfer fluid through the heat exchange chamber interior. For instance, a "horizontal heat exchange chamber" can have a chamber length which is less than the chamber height of the heat exchange chamber.

Besides pure vertical and horizontal heat exchange chambers, a mixture of "vertical heat exchange chamber" and "horizontal heat exchange chamber" is possible, too. In such a heat exchange chamber, the main flow of the heat transfer fluid is the result of horizontal and vertical movement of the heat transfer fluid through the heat exchange chamber interior.

According to the invention, at least two first openings are arranged vertically to each other and/or at least two second openings are arranged vertically to each other. Openings are arranged above each other. By this measure it is possible to influence a vertical distribution of heat exchange flows in order to improve a temperature distribution (temperature front) in the heat storage material and heat exchange chamber interior respectively. Isothermal lines perpendicular to the flow direction are influenced.

The temperature front is defined by neighboring cold and hot areas of the heat storage material in the heat exchange chamber interior caused by the flow of the heat transfer fluid through the heat exchange chamber interior. The temperature front is aligned perpendicular to the respective flow direction of the heat exchange flow through the heat exchange chamber. During the charging mode the heat exchange flow is directed in a charging mode direction wherein the temperature front moves along this charging mode direction. In contrast to that, during the discharging mode the heat exchange flow is directed in the discharging mode direction (opposite to the charging mode direction) wherein the temperature front moves along the discharging mode direction. In both cases, the temperature front of the heat exchange chamber is migrating through the heat exchange chamber to the respective hot/cold ends of the heat exchange chamber. It is to be noted that in case of countercurrent operation, the hot (hot opening) end remains the hot end (hot opening), independently from the mode (charging mode or discharging mode).

The temperature front is a zone of strong temperature gradient in the heat storage material, i.e. high temperature difference between hot and cold areas. In this application it separates the hot (charged with heat) and the cold (not charged) zone in the heat exchange chamber with the heat storage material. The temperature front develops due to the transfer of heat from the heat transfer fluid to the heat storage material during the charging mode and due to the transfer of heat from the heat storage material to the heat transfer fluid during the discharging mode. Isothermal zones/lines develop ideally (e.g. without the influence of gravitation) perpendicular to the main flow direction, i.e. zones/lines of constant temperature.

In order to optimize the efficiency of the heat exchange system it is advantageous to ensure a uniform temperature front. There are just small variations concerning the temperature gradients perpendicular to the flow direction. In a vertical heat exchange chamber with a flow direction top down, the temperature front is nearly uniform due to natural convection. So, in this case additional measures are not necessary. In contrast to that, natural convection leads to a nonuniform temperature front in a horizontal heat exchange chamber. So, in this case additional measures could be meaningful (like usage of more openings or usage of more flow adjusting elements).

Preferably, the chamber boundary with one of the openings comprises a transition area with a tapering profile such that an opening diameter of the opening aligns to a first tapering profile diameter of the tapering profile and a chamber diameter of the heat exchange chamber aligns to a second tapering profile diameter of the tapering profile. The transition area comprises an increasing cross section from the respective opening towards the heat exchange chamber. This is especially advantageous for the first opening for guiding the heat transfer fluid into the heat exchange chamber. The diameter of the transition area expands from the opening diameter of the first opening to the diameter of the heat exchange chamber. With the aid of the tapering profile the inflow of the heat transfer fluid is guided into the heat exchange chamber interior. The guided inflow is distributed to a wide area with the heat storage material. By this measure a capacity of the heat exchange unit (heat storage material which is located in the heat exchange chamber) can be highly exploited. In addition, the efficiency of the heat exchange can be improved by adapting the heat exchange flow. Remark: For additionally adapting the heat exchange flow, a diffuser can be located at the first opening, especially in the transition area. By means of the diffuser an incident flow of the heat transfer fluid into the heat exchange chamber interior can be adjusted. For instance, such a diffuser is formed by stones which are located in the transition area with the tapering profile.

For the case that the heat exchange chamber comprises a number of first openings it is very advantageous to arrange a described transition area at that number of first openings. Thereby, the first openings can comprise a joint transition area or individual transition areas.

The transition area with the second opening for guiding the heat transfer fluid out of the heat exchange chamber interior can be tapered, too. By this measure the guiding of heat flow out of the heat exchange chamber interior of the heat exchange chamber is simplified.

In this context, the use of a short transition area is very advantageous. For instance, the short transition area comprises a dimension which is less than 50% of a length of the heat exchange chamber. For instance, the dimension is about 20% of the length of the heat exchange chamber. The length is the dimension of the heat exchange chamber that is parallel to the main flow direction of the heat transfer fluid through the heat exchange chamber interior. But of course, the dimension of the transition area is dependent on a number of features of the complete heat exchange system, e.g. temperature of the heat transfer fluid, mass flow of the heat exchange flow, speed of the heat exchange flow at the relevant opening temperatures, etc.

In order to save space and in order to reduce the surface-volume ratio for a reduced heat loss, it is advantageous to implement a transition area as short as possible. The result is a short transition channel for guiding the inflow into the heat exchange chamber interior. Besides an efficient usage of the capacity of the heat exchange chamber a low space requirement is connected to this solution.

Preferably, the heat exchange chamber comprises a cylindrically shaped chamber boundary. For instance, the chamber boundary which comprises the first opening is formed as a circular cylinder and/or the chamber boundary with the second opening is formed as a circular cylinder. Such shapes lead to best surface-volume ratios.

The dimensions of the heat exchange chamber can be different. But, the invention is especially advantageous for heat exchange systems with large heat exchange chambers. Therefore, in a preferred embodiment, the horizontal heat exchange chamber comprises a heat exchange chamber length which is at least twice of a heat exchange chamber width of the heat exchange chamber and/ or which is at least twice of a heat exchange chamber height of the heat exchange chamber. Preferably, the heat exchange chamber length is selected from the range between 20 m and 300 m. In addition, the heat exchange chamber width and/or the heat exchange chamber height are selected from the range of 1 m to 100 m.

The heat exchange system is especially adapted for operation at high temperatures of more than 300 °C. Therefore, in a preferred embodiment, an operating temperature of the operating mode is selected from the range between 300 °C and 1000 °C, preferably selected from the range between 500 °C and 1000 °C, more preferably selected from the range between 600 °C and 1000 °C, 650 °C to 1000 °C and most preferably between 700 °C and 1000 °C. A deviation of the temperature ranges is possible. In this context, very advantageous is an upper limit of the temperature range of 900 °C and most preferably an upper limit of the temperature range of 800 °C. The heat exchange system is a high temperature heat exchange system.

The proposed invention can be applied for renewable energy production as well as for conventional energy production. For instance, in order to increase the flexibility the steam cycle of fossil fired power plants (or nuclear power plants, etc.) it can be combined with the heat exchange system proposed here. In this case, the boiler of the steam cycle of the power plant can be operated with fuel when fuel costs are lower than electricity costs and the heat exchange system is charged in periods when electricity prices are low. Alternatively, the charging can take place during a period of excess production of energy.

With the invention following specific advantages are achieved:
- With the aid of the heat exchange system thermal energy can be flexibly stored and released.
- The heat exchange chambers of the exchange system can be activated or deactivated. All heat exchange chambers or just specific heat storage chambers participate in the charging mode and/or discharging mode of the heat exchange system.
- The use of specific heat exchange chambers for the charging mode and/or discharging mode of the heat exchange system reduces a pressure loss of the heat transfer fluid in the ducting system of the heat exchanges system and improves consequently the efficiency of the heat exchange system for the case that the heat exchange system is not fully charged or discharged.
- The problem of convection for the temperature profile can be limited to specific heat exchange chambers.
- Depending of the specific configuration and requirements to the storage capacity and flexibility, a heat exchange system with an appropriate number of heat exchange chambers can be designed. These heat exchange chambers can be flexibly connected and disconnected according to the needs of the heat exchange system.
- Based on the improved flexibility and hence based on the improved efficiency it is advantageous to use the heat exchange system for long term thermal storage applications. Charging mode, discharging mode and idle mode of the heat exchange system can be efficiently implemented.
- An integration of the heat exchange system into an energy (distribution) system can simply be implemented

### BRIEF DESCRIPTION OF THE DRAWINGS

Further features and advantages of the invention are produced from the description of exemplary embodiments with reference to the drawings. The drawings are schematic.
Figures 1 shows a heat exchange chamber of the heat exchange system.
Figure 2 shows a temperature distribution of the heat exchange chamber of figure 1 in a charging mode.
Figure 3 shows the heat exchange system in a charging mode.
Figure 4 shows the same heat exchanges system in a discharging mode.
Figure 5A shows the shape of the temperature front in the heat exchange chamber interior after the charging mode process is stopped.
Figure 5B shows the shape of the temperature front in the heat exchange chamber interior after a period of idle.
Fig 6 to 11 show a heat exchange system with small heat exchange chambers in series.

### DESCRIPTION OF PREFERRED EMBODIMENTS

Essential component of this invention is a heat exchange system 1 with at least two heat exchange chambers 11 and 12 on a high temperature level.

Heat storage material 121 (e.g. stones or sand) which is located in the heat exchange chamber interior 112 of the heat exchange chamber 11 and 12 and can be charged and discharged with heat via the heat transfer fluid 13. Heat is stored by the heat storage material 121 and can be release from the storage material 121.

The temperature level of the stored heat is significantly higher compared to methods applied so far to increase the efficiency. The temperature level lies between 300 °C and 1000 °C, preferably between 500 °C and 1000 °C, more preferably between 650 °C and 1000 °C and most preferably between 700 °C and 1000 °C. The thermal capacity of the heat exchange system 1 lies in the range between 0.3 GWh and 100 GWh, which causes a thermal power of 50 MW.

The heat exchange chambers 11 and 12 comprise heat exchange chamber boundaries 111 which surround at least one heat exchange chamber interior 112 of the heat exchange chambers 11 and 12. The heat exchange chamber 11 and 12 are a horizontal heat exchange chambers 113.

The heat exchange chamber boundaries 111 comprise at least one first opening 1111 for guiding in an inflow 132 of at least one heat transfer fluid 131 into the heat exchange chamber interior 112 and at least one second opening 1112 for guiding an outflow 133 of the heat transfer fluid 131 out of the heat exchange chamber interior 112. At least one heat storage material 121 is arranged in the heat exchange chamber interior 112 such that a heat exchange flow 13 of the heat transfer fluid 131 through the heat exchange chamber interior 112 causes a heat exchange between the heat storage material 121 and the heat transfer fluid 131.

Exemplarily, the heat exchange chamber length of the horizontal heat exchange chamber 11 is about 200 m, the heat exchange chamber height of the heat exchange chamber 11 is about 10 m and the heat exchange chamber width of the heat exchange chamber is about 50 m.

With the aid of the proposed heat exchange system 1, thermal energy can be stored on a high temperature level during the charging mode. This stored thermal energy can be used during the discharging mode for the production of steam in a water steam cycle for reconversion into electrical energy.

The heat exchange chamber 11 and the further heat exchange chamber 12 are filled with solid heat storage material 121. The solid heat storage material 121 comprises stones. Alternatively, sand is used as heat storage material 121.

There are transition area 116 of the heat exchange chambers 11 and 12 with tapering profiles 1161. Thereby an opening diameter 1113 of the opening 1111 or 1112 aligns to a first tapering profile diameter 1162 of the tapering profile 1161 and a chamber diameter 117 of the heat exchange chambers 11 or 12 aligns to a second tapering profile diameter 1163 of the tapering profile 1161.

The inflow 132 of the heat transfer fluid 13 is guided into the heat exchange chamber interior 112. The guided inflow 132 is distributed to a wide area of heat storage material 121. By this measure a capacity of the heat exchange unit (heat storage material 121 which is located in the heat exchange chamber interior 112) can be utilized in an advantageous manner.

The transition areas 116 of the heat exchange chambers 11 and 12 are short. The short transition areas 116 project into the respective heat exchange chambers 11 and 12. In each case, the result is a short transition channel for the guiding of the inflow 132 of the heat transfer fluid into the heat exchange chamber interior 112 of the heat exchange chambers 11 and 12.

The heat exchange flows 13 through the heat exchange chamber interior of each of the heat exchange chambers 11 and 12 can be adjusted individually with the aid of at least one flow adjusting element 134. The flow adjusting element 134 is a flow suppressing element 1343, which is a passive fluid control device 1342.

The heat exchange system 1 is additionally equipped with at least one flow adjusting element 134 for additionally adjusting a mass flow of the heat exchange flow 13 of the heat transfer fluid 131 through the heat exchange chamber interior 112 of the respective heat exchange chamber 11 and 12. The flow adjusting element 134 is an active fluid motion device 1341 like a blower or a pump. Such a device enables a transportation of the heat transfer fluid 131 through the heat exchange chamber interior 112 of the heat exchange chambers 11 and 12. The blower or the pump can be installed upstream or downstream of to the heat exchange chamber 11 and 12.

In the charging mode, the heat transfer fluid 131 enters the heat exchange chamber 11 through a diffuser 1164. The diffuser 1164 comprises stones 1165 and is arranged at the transition area 116 of the heat exchange chamber 11.

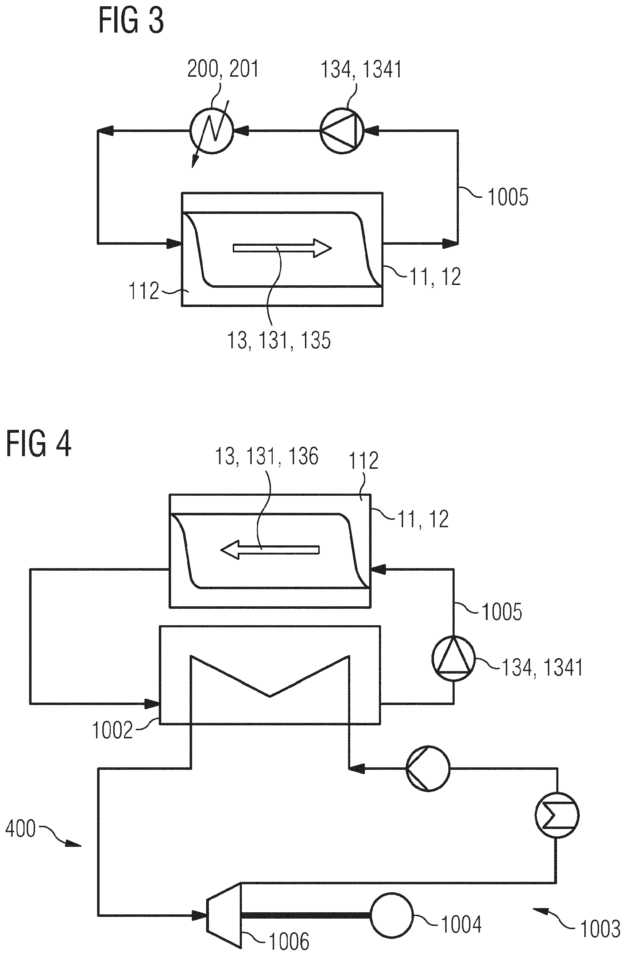

The heat exchange flow 13 of the heat transfer fluid 131 is directed in the charging mode direction 135. The additional flow adjusting element 134, 1341 is advantageous installed upstream of the charging unit 200, 201 (figure 3): Relatively cold heat transfer fluid passes the flow adjusting element 134, 1341 before absorbing heat from the charging unit.

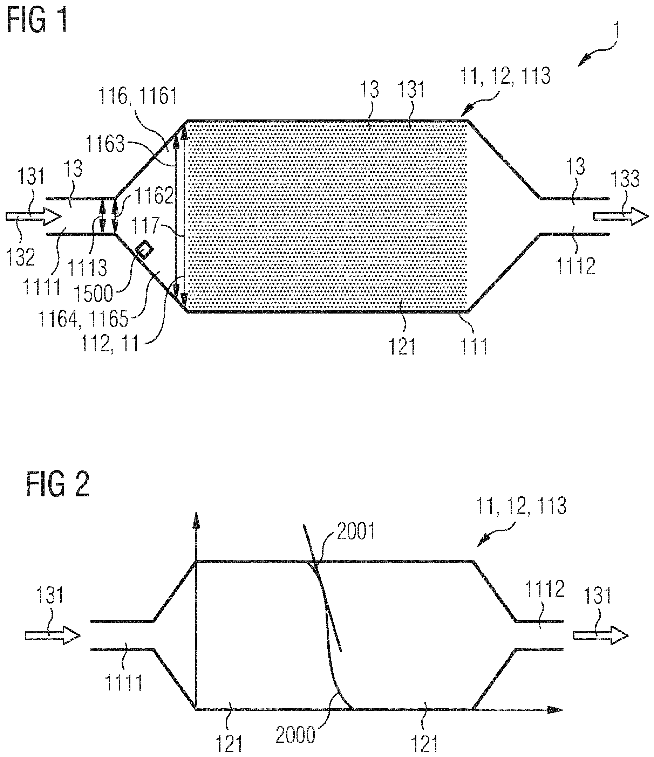

For the charging mode, the heat transfer fluid 131 is heated up by the electrical heating device 201 (charging unit 200). This charged (heated) heat transfer fluid is guided into the heat exchange chamber interior 112 of the heat exchange chamber 11 for charging of the heat storage material. Thereby the heat exchange between the heat transfer fluid and the heat storage material takes place. With reference 2000 the temperature front at a certain time of this charging process is shown (figure 2). In addition, the temperature gradient 2001 which results in the temperature front is depicted.

For the discharging mode the heat exchange system 1 comprises one or several heat exchange chambers 11 mentioned above, an active fluid motion device 1341 to circulate the heat transfer fluid 131 and a thermal machine for re-electrification, which can be a water/steam cycle 1003. The working fluid of this cycle is water and steam. The water/steam cycle 1003 has the function of a discharging unit 400. Essential components of the steam turbine cycle 1003 are a steam turbine 1006 and a generator 1004.

In the discharging mode, the heat exchange flow of the heat transfer fluid is directed into the discharging mode direction 136 (figures 3 and 4 refer to the heat exchange system with the same heat exchange chamber 11).

With the aid of the heat exchange system (heat exchanger) 1002 heat of the heat transfer fluid is transferred to the working fluid of the steam cycle 1003.

The heat exchange system 1 comprises a closed loop 1005. Heat exchange fluid which has passed the heat exchange chamber interior 112 is guided back into the heat exchange chamber interior 112.

Additional aspects of the embodiments are derived from the different figures:

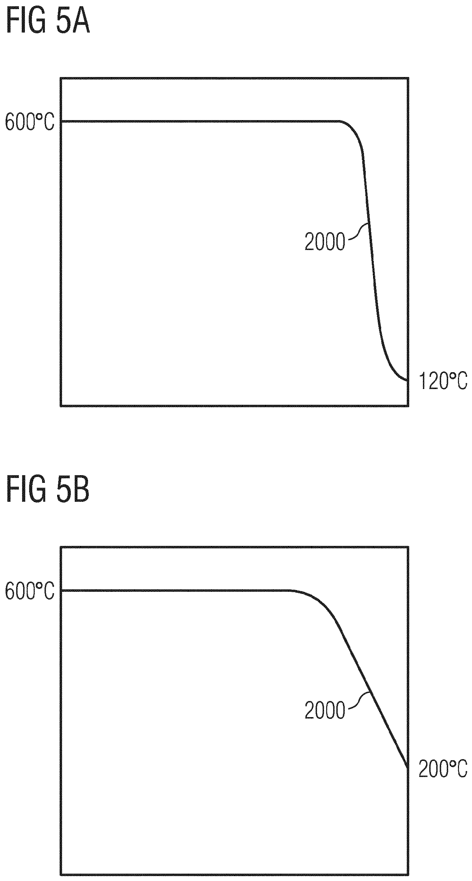

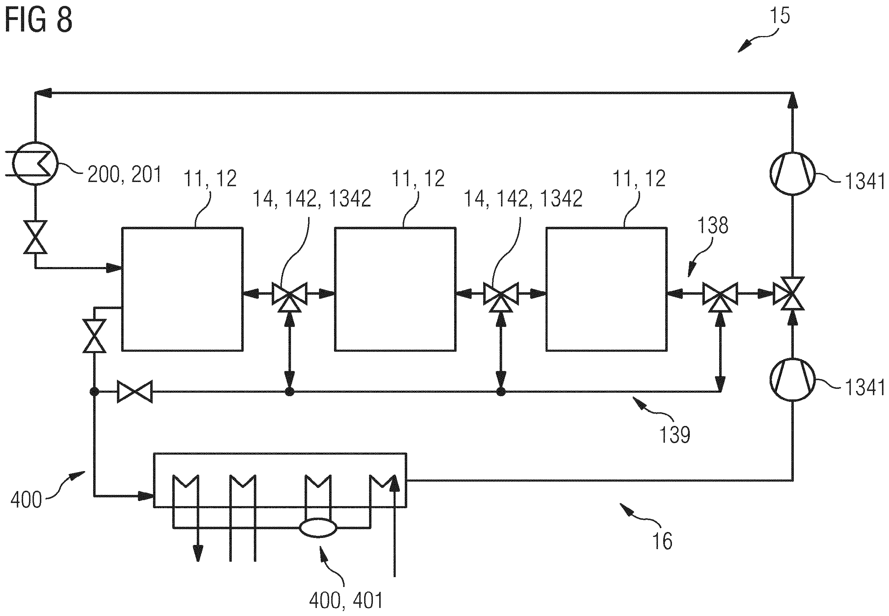

Figures 5A and 5B show the development of the temperature front 2000 in a heat exchange chamber interior 112 after the charging mode process is stopped. During idling the heat storage chambers can be disconnected from each other by using switching elements 142 (for instance, see figure 8). The switching element 142 is a valve. The switching element 142 prevents a mass flow of the heat transfer fluid between the heat exchange chamber interiors 112 of the heat exchange chamber 11 and 12 initiated by natural convection. So mixing of heat transfer fluids and hence mixing of temperature between the heat storage chambers 11 and 12 is prevented. The temperature profile can only flatten out in the respective heat exchange chamber interior 112 that are not fully charged and contain the temperature gradient (see figures 5A and 5B).

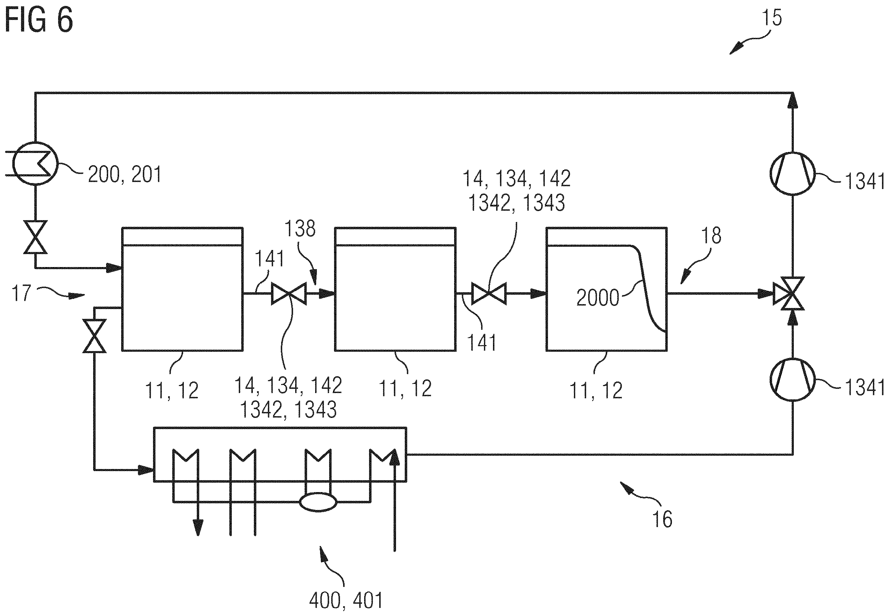

Figure 6 shows small individual heat exchange chambers in series with a closed charge cycle (loop) 15 and discharge cycle (loop). Each of the cycles comprises individual active fluid motion devices 1341. These active fluid motion devices are blowers.

The heat exchange chamber interiors of the heat exchange chambers are conjunct together with the aid of ducting elements 141 and conjunction elements 14. The conjunction elements 14 are valves. These conjunction elements 14 are passive fluid control devices 1342 in form of valves. Theses valves have the possible function of a flow suppressing element 1343. By that, the flow of the heat transfer fluid through the ducting system of the heat exchange system can be suppressed.

The charging unit 200 of the charge cycle is an electrical heating device 201. The discharging unit 400 of the discharge cycle is a heat recovery steam generator (HRSG) 401.

During the charging mode, the charged heat transfer fluid 131 is 131 is guided into the first heat exchange chamber at a hot end 17 of the heat exchange system 1. At a cold end 18, the heat transfer fluid 131 is guided back to the charging unit 200.

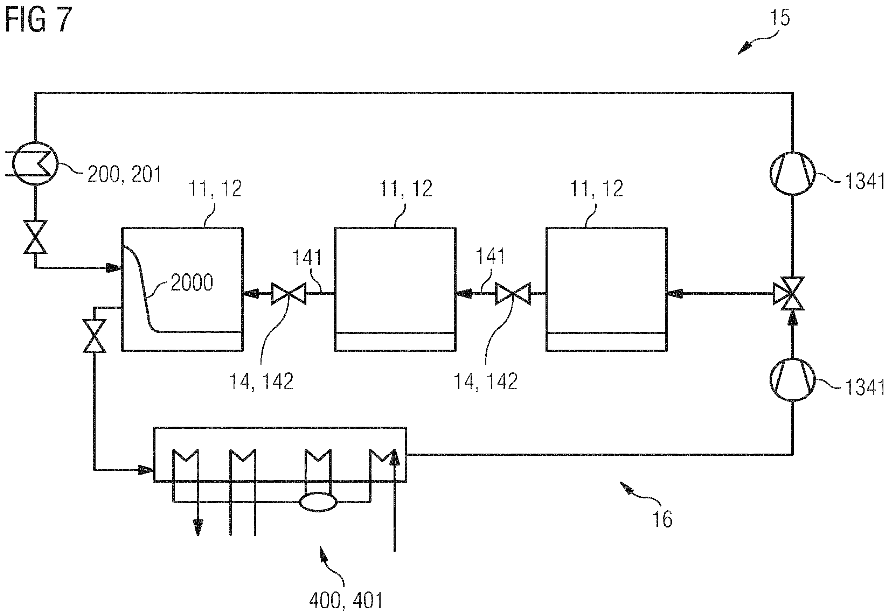

Figure 7 depicts small individual heat exchange chambers 11, and 12 in series with closed charge 15 and closed discharge cycle 16 with different temperature profiles during discharging.

Figure 8 shows small individual heat exchange chambers 11 and 12 in series with closed charge 15 and closed discharge cycle 16. The heat transfer fluid 131 is guided through the heat exchange system 1 along a main path 138. In addition, the guiding through a side path 139 is possible, too. So, the heat exchange chamber interiors 112 of the heat exchange chambers are connectable in series as well as connectable in parallel. Thereby, conjunction elements 14 are used. The conjunction elements 14 are switching elements 141. The switching elements 141 are specific passive fluid control devices 1342: These passive fluid control devices are three way valves.

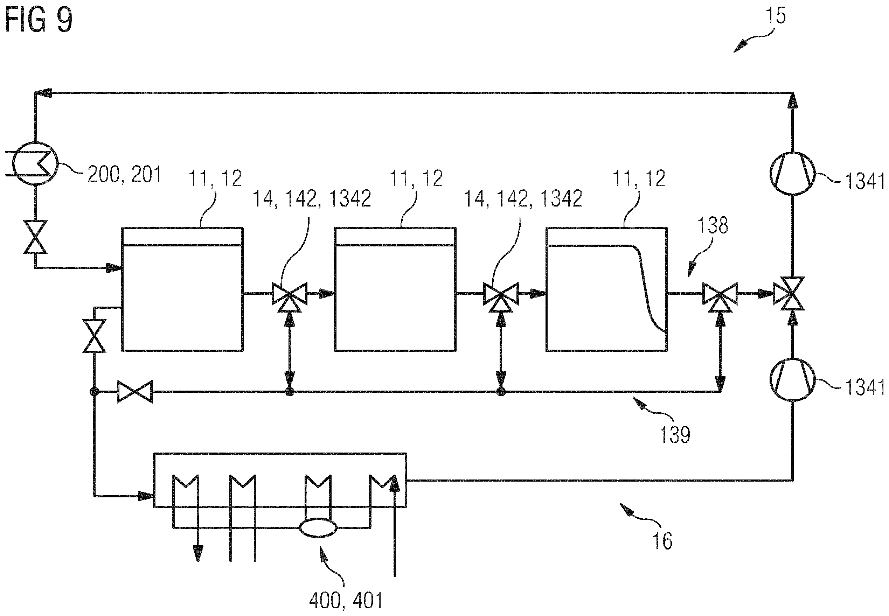

Figure 9 show the embodiment based on figure 8 with small individual heat exchange chambers in series in a closed charge cycle 15 as well as in a closed discharge cycle 16. Different temperature profiles of the heat exchange chamber interiors are depicted. A redirection of the heat transfer fluid 131 into the heat exchange chambers 11 and 12 is possible with the aid of a side path 139 and respective switching elements 141.

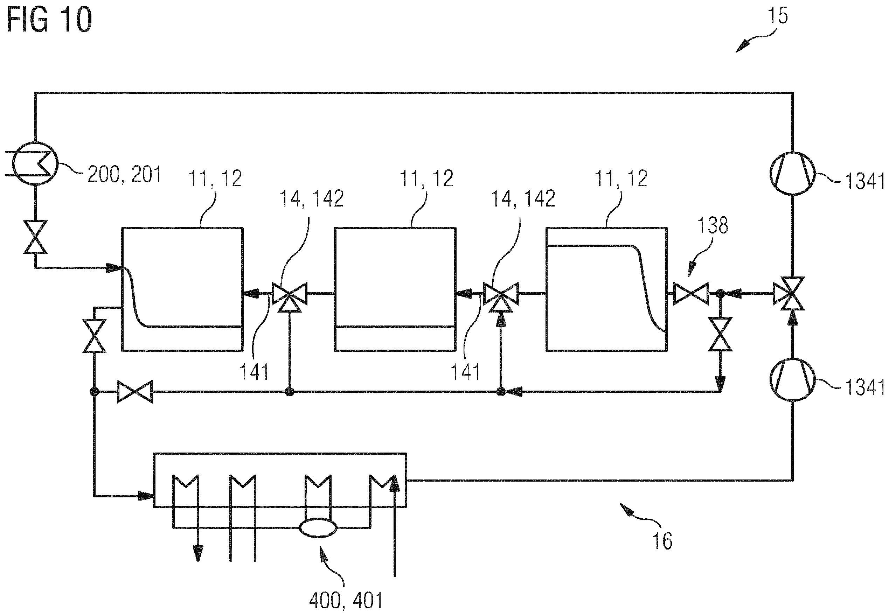

Figure 10 show the embodiment based on figure 8 with small individual heat exchange chambers in series in a closed charge cycle 15 as well as in a closed discharge cycle 16. In contrast to figure 9, different temperature profiles of the heat exchange chamber interiors are depicted. This is possible due to the individual activation of the heat exchange chambers 11 and 12.

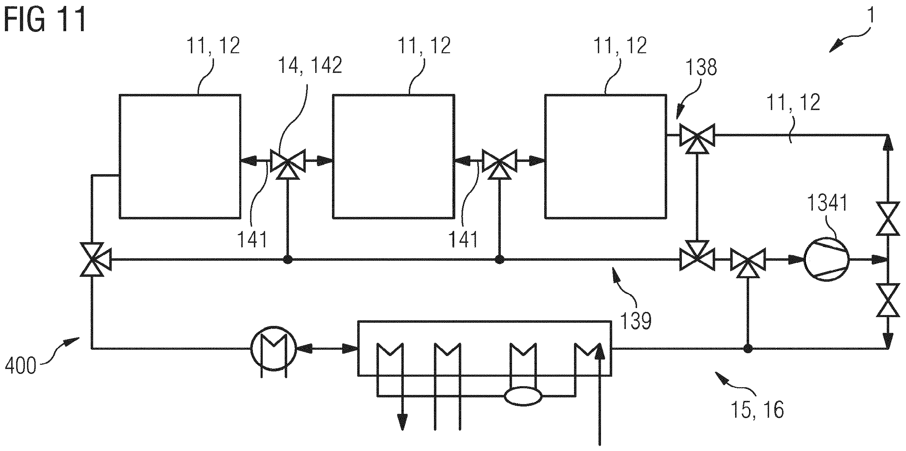

In contrast to the above described embodiments figure 11 shows small individual heat exchange chambers in series with charge cycle and discharge cycle. Here, just one single duct system for the charge cycle and the discharge cycle is used.

## Claims

1. Heat exchange system (1), with
- at least two heat exchange chambers (11, 12),
- each of the heat exchange chambers (11, 12) comprises heat exchange chamber boundaries (111) which surround at least one heat exchange chamber interior (112) of the heat exchange chamber (11, 12), wherein
- the heat exchange chamber boundaries (111) comprise at least one first opening (1111) for guiding in of an inflow (132) of at least one heat transfer fluid (131) into the heat exchange chamber interior (112) and at least one second opening (1112) for guiding out of an outflow (133) of the heat transfer fluid (131) out of the heat exchange chamber interior (112);
- at least one heat storage material (121) is arranged in the heat exchange chamber interior (112) such that a heat exchange flow (13) of the heat transfer fluid (131) through the heat exchange chamber interior (112) causes a heat exchange between the heat storage material (121) and the heat transfer fluid (131);
- the heat exchange flow (13) through the heat exchange chamber interior (112) of the each of the heat exchange chambers (11, 12) can be adjusted individually with the aid of at least one flow adjusting element (134);
**characterised in that**
- the flow adjusting element (134) comprises at least one active fluid motion device (1341) which is selected from the group consisting of blower, fan and pump;
- at least two first openings (1111) are arranged vertically to each other and/or at least two second openings (1112) are arranged vertically to each other;
- the heat exchange chambers (11, 12) are horizontal heat exchange chambers;
- the heat exchange chamber interiors (112) of the heat exchange chambers (11, 12) are serially connected together such that the inflow (132) of the heat transfer fluid (131) into the heat exchange chamber interior (112) of one of the heat exchange chambers (11, 12) comprises the outflow (133) of the heat transfer fluid (131) out of the heat exchange chamber interior (112) of the other heat exchange chamber (12, 11); and
- the heat exchange chambers (11, 12) are individually activatable or deactivatable.

2. Heat exchange system according to claim 1, wherein the flow adjusting element (134) is designed for adjusting the inflow (132) into the heat exchange chamber interior (112) of at least one of the heat exchange chambers (11, 12) and/or for adjusting the outflow (133) out of the heat exchange chamber interior of at least one of the heat exchange chambers (11, 12).

3. Heat exchange system according to claim 1 or 2, wherein the flow adjusting element (134) comprises at least one flow suppressing element (1343).

4. Heat exchange system according to one of the claims 1 to 3, wherein the flow adjusting element (134) and/or the flow suppressing element (1343) comprise at least one passive fluid control device (1342) which is selected from the group consisting of activatable bypass pipe, nozzle, damper, flap and valve.

5. Heat exchange system according to one of the claims 1 to 4, wherein the heat exchange chamber interiors (112) of the heat exchange chambers (11, 12) are conjunct together with the aid of at least one conjunction element (14) for guiding of the heat transfer fluid (131).

6. Heat exchange system according to claim 5, wherein the conjunction element (14) comprises at least one ducting element (141) and/or at least one switching element (142).

7. Heat exchange system according to claim 6, wherein the switching element (141) and/or the ducting element (142) comprise the flow adjusting element (134).

8. Heat exchange system according to one of the claims 1 to 7, which is equipped with at least one charging unit (200) for heating the heat transfer fluid (131) of at least one of the heat exchange chambers (11, 12).

9. Heat exchange system according to claim 1 or 8, wherein the heat storage material (121) comprises sand and/or stones.

10. Heat exchange system according to one of the claims 1 to 9, wherein the heat transfer fluid (131) comprises a gas at ambient gas pressure.

11. Heat exchange system according to claim 10, wherein the gas at the ambient pressure is air.

12. Method for exchanging heat by using the heat exchange system according to one of the claims 1 to 11, wherein the heat exchange flows (13) through the heat exchange chamber interior (112) of each of the heat exchange chambers (11, 12) is individually adjusted with the aid of the flow adjusting element (134).

13. Method according to claim 12, wherein the heat exchange flow (13) through the heat exchange chamber interior (112) of at least one of the heat exchange chambers (11, 12) is interrupted during an idle mode of the heat exchange system (1) .

## Patentansprüche

1. Wärmeaustauschsystem (1) mit
- mindestens zwei Wärmeaustauschkammern (11, 12),
- wobei jede der Wärmeaustauschkammern (11, 12) Wärmeaustauschkammerbegrenzungen (111) umfasst, die mindestens einen Wärmeaustauschkammerinnenraum (112) der Wärmeaustauschkammer (11, 12) umgeben, wobei
- die Wärmeaustauschkammerbegrenzungen (111) mindestens eine erste Öffnung (1111) zum Einleiten eines Zuflusses (132) mindestens eines Wärmeübertragungsmediums (131) in den Wärmeaustauschkammerinnenraum (112) und mindestens eine zweite Öffnung (1112) zum Ausleiten eines Abflusses (133) des Wärmeübertragungsmediums (131) aus dem Wärmeaustauschkammerinnenraum (112) umfassen,
- mindestens ein Wärmespeichermaterial (121) so in dem Wärmeaustauschkammerinnenraum (112) angeordnet ist, dass ein Wärmeaustauschfluss (13) des Wärmeübertragungsmediums (131) durch den Wärmeaustauschkammerinnenraum (112) für einen Wärmeaustausch zwischen dem Wärmespeichermaterial (121) und dem Wärmeübertragungsmedium (131) sorgt,
- der Wärmeaustauschfluss (13) durch den Wärmeaustauschkammerinnenraum (112) jeder der Wärmeaustauschkammern (11, 12) mithilfe mindestens eines Durchflusseinstellelements (134) einzeln eingestellt werden kann, **dadurch gekennzeichnet, dass**
- das Durchflusseinstellelement (134) mindestens eine aktive Medienumwälzvorrichtung (1341) umfasst, die aus der Gruppe ausgewählt ist, welche aus einem Gebläse, einem Ventilator und einer Pumpe besteht,
- mindestens zwei erste Öffnungen (1111) vertikal zueinander angeordnet sind und/oder mindestens zwei zweite Öffnungen (1112) vertikal zueinander angeordnet sind,
- es sich bei den Wärmeaustauschkammern (11, 12) um horizontale Wärmeaustauschkammern handelt,
- die Wärmeaustauschkammerinnenräume (112) der Wärmeaustauschkammern (11, 12) so in Reihe miteinander verbunden sind, dass der Zufluss (132) des Wärmeübertragungsmediums (131) in den Wärmeaustauschkammerinnenraum (112) einer der Wärmeaustauschkammern (11, 12) den Abfluss (133) des Wärmeübertragungsmediums (131) aus dem Wärmeaustauschkammerinnenraum (112) der anderen Wärmeaustauschkammer (12, 11) umfasst, und
- sich die Wärmeaustauschkammern (11, 12) einzeln aktivieren oder deaktivieren lassen.

2. Wärmeaustauschsystem nach Anspruch 1, wobei das Durchflusseinstellelement (134) zum Einstellen des Zuflusses (132) in den Wärmeaustauschkammerinnenraum (112) mindestens einer der Wärmeaustauschkammern (11, 12) und/oder zum Einstellen des Abflusses (133) aus dem Wärmeaustauschkammerinnenraum mindestens einer der Wärmeaustauschkammern (11, 12) ausgelegt ist.

3. Wärmeaustauschsystem nach Anspruch 1 oder 2, wobei das Durchflusseinstellelement (134) mindestens ein Durchflussunterdrückungselement (1343) umfasst.

4. Wärmeaustauschsystem nach einem der Ansprüche 1 bis 3, wobei das Durchflusseinstellelement (134) und/oder das Durchflussunterdrückungselement (1343) mindestens eine passive Fluidregelvorrichtung (1342) umfasst, die aus der Gruppe ausgewählt ist, welche aus einer aktivierbaren Bypassleitung, Düse, Drossel, Klappe und einem aktivierbaren Ventil besteht.

5. Wärmeaustauschsystem nach einem der Ansprüche 1 bis 4, wobei die Wärmeaustauschkammerinnenräume (112) der Wärmeaustauschkammern (11, 12) mithilfe mindestens eines Verbindungselements (14) zum Leiten des Wärmeübertragungsmediums (131) miteinander verbunden sind.

6. Wärmeaustauschsystem nach Anspruch 5, wobei das Verbindungselement (14) mindestens ein Rohrleitungselement (141) und/oder mindestens ein Schaltelement (142) umfasst.

7. Wärmeaustauschsystem nach Anspruch 6, wobei das Schaltelement (141) und/oder das Rohrleitungselement (142) das Durchflusseinstellelement (134) umfasst.

8. Wärmeaustauschsystem nach einem der Ansprüche 1 bis 7, das mit mindestens einer Zufuhreinheit (200) zum Erwärmen des Wärmeübertragungsmediums (131) aus mindestens einer der Wärmeaustauschkammern (11, 12) ausgestattet ist.

9. Wärmeaustauschsystem nach Anspruch 1 oder 8, wobei das Wärmespeichermaterial (121) Sand und/oder Steine umfasst.

10. Wärmeaustauschsystem nach einem der Ansprüche 1 bis 9, wobei das Wärmeübertragungsmedium (131) ein Gas auf Umgebungsgasdruck umfasst.

11. Wärmeaustauschsystem nach Anspruch 10, wobei es sich bei dem Gas auf Umgebungsdruck um Luft handelt.

12. Verfahren zum Austauschen von Wärme mithilfe des Wärmeaustauschsystems nach einem der Ansprüche 1 bis 11, wobei die Wärmeaustauschflüsse (13) durch den Wärmeaustauschkammerinnenraum (112) jeder der Wärmeaustauschkammern (11, 12) mithilfe des Durchflusseinstellelements (134) einzeln eingestellt werden.

13. Verfahren nach Anspruch 12, wobei der Wärmeaustauschfluss (13) durch den Wärmeaustauschkammerinnenraum (112) mindestens einer der Wärmeaustauschkammern (11, 12) bei einem Ruhezustand des Wärmeaustauschsystems (1) unterbrochen wird.

## Revendications

1. Système d'échange de chaleur (1), avec
- au moins deux chambres d'échange de chaleur (11, 12),
- chacune des chambres d'échange de chaleur (11, 12) comprend des limites de chambre d'échange de chaleur (111) qui entourent au moins un intérieur de chambre d'échange de chaleur (112) de la chambre d'échange de chaleur (11, 12), dans lequel
- les limites de chambre d'échange de chaleur (111) comprennent au moins une première ouverture (1111) destinée au guidage d'un flux entrant (132) d'au moins un fluide de transfert de chaleur (131) dans l'intérieur de chambre d'échange de chaleur (112) et au moins une seconde ouverture (1112) destinée au guidage d'un flux sortant (133) du fluide de transfert de chaleur (131) hors de l'intérieur de chambre d'échange de chaleur (112) ;
- au moins un matériau d'emmagasinage de chaleur (121) est agencé dans l'intérieur de chambre d'échange de chaleur (112) de telle sorte qu'un flux d'échange de chaleur (13) du fluide de transfert de chaleur (131) à travers l'intérieur de chambre d'échange de chaleur (112) génère un échange de chaleur entre le matériau d'emmagasinage de chaleur (121) et le fluide de transfert de chaleur (131) ;
- le flux d'échange de chaleur (13) à travers l'intérieur de chambre d'échange de chaleur (112) de chacune des chambres d'échange de chaleur (11, 12) peut être ajusté individuellement à l'aide d'au moins un élément d'ajustement de flux (134) ;
**caractérisé en ce que**
- l'élément d'ajustement de flux (134) comprend au moins un dispositif de mouvement de fluide actif (1341) qui est sélectionné dans le groupe constitué par une soufflante, un ventilateur et une pompe ;
- au moins deux premières ouvertures (1111) sont disposées verticalement l'une par rapport à l'autre et/ou au moins deux secondes ouvertures (1112) sont disposées verticalement l'une par rapport à l'autre ;
- les chambres d'échange de chaleur (11, 12) sont des chambres d'échange de chaleur horizontales ;
- les intérieurs de chambre d'échange de chaleur (112) des chambres d'échange de chaleur (11, 12) sont reliés en série ensemble de telle sorte que le flux entrant (132) du fluide de transfert de chaleur (131) dans l'intérieur de chambre d'échange de chaleur (112) de l'une des chambres d'échange de chaleur (11, 12) comprend le flux sortant (133) du fluide de transfert de chaleur (131) hors de l'intérieur de chambre d'échange de chaleur (112) de l'autre chambre d'échange de chaleur (12, 11) ; et
- les chambres d'échange de chaleur (11, 12) peuvent être activées et désactivées individuellement.

2. Système d'échange de chaleur selon la revendication 1, dans lequel l'élément d'ajustement de flux (134) est conçu pour ajuster le flux entrant (132) dans l'intérieur de chambre d'échange de chaleur (112) d'au moins une des chambres d'échange de chaleur (11, 12) et/ou pour ajuster le flux sortant (133) hors de l'intérieur de chambre d'échange de chaleur d'au moins une des chambres d'échange de chaleur (11 12) .

3. Système d'échange de chaleur selon la revendication 1 ou 2, dans lequel l'élément d'ajustement de flux (134) comprend au moins un élément de suppression de flux (1343).

4. Système d'échange de chaleur selon l'une des revendications 1 à 3, dans lequel l'élément d'ajustement de flux (134) et/ou l'élément de suppression de flux (1343) comprennent au moins un dispositif de commande de fluide passif (1342) qui est sélectionné dans le groupe constitué par un tuyau de dérivation, une buse, un régulateur, un volet et une soupape pouvant être activé(s).

5. Système d'échange de chaleur selon l'une des revendications 1 à 4, dans lequel les intérieurs de chambre d'échange de chaleur (112) des chambres d'échange de chaleur (11, 12) sont associés à l'aide d'au moins un élément de conjonction (14) destiné au guidage du fluide de transfert de chaleur (131).

6. Système d'échange de chaleur selon la revendication 5, dans lequel l'élément de conjonction (14) comprend au moins un élément de tuyauterie (141) et/ou au moins un élément de commutation (142).

7. Système d'échange de chaleur selon la revendication 6, dans lequel l'élément de commutation (141) et/ou l'élément de tuyauterie (142) comprennent l'élément d'ajustement de flux (134) .

8. Système d'échange de chaleur selon l'une des revendications 1 à 7, qui est équipé d'au moins une unité de charge (200) destinée à chauffer le fluide de transfert de chaleur (131) d'au moins une des chambres d'échange de chaleur (11, 12).

9. Système d'échange de chaleur selon la revendication 1 ou 8, dans lequel le matériau d'emmagasinage de chaleur (121) comprend du sable et/ou des cailloux.

10. Système d'échange de chaleur selon l'une des revendications 1 à 9, dans lequel le fluide de transfert de chaleur (131) comprend un gaz à la pression de gaz ambiante.

11. Système d'échange de chaleur selon la revendication 10, dans lequel le gaz à la pression ambiante est l'air.

12. Procédé destiné à échanger de la chaleur en utilisant le système d'échange de chaleur selon l'une des revendications 1 à 11, dans lequel les flux d'échange de chaleur (13) à travers l'intérieur de chambre d'échange de chaleur (112) de chacune des chambres d'échange de chaleur (11, 12) sont ajustés individuellement à l'aide de l'élément d'ajustement de flux (134) .

13. Procédé selon la revendication 12, dans lequel le flux d'échange de chaleur (13) à travers l'intérieur de chambre d'échange de chaleur (112) d'au moins une des chambres d'échange de chaleur (11, 12) est interrompu au cours d'un mode veille du système d'échange de chaleur (1).
